# EUROPEAN PATENT APPLICATION

(11) **EP 4 123 119 A1**
(43) Date of publication of application: **25.01.2023**
(21) Application number: 22185506.7
(22) Date of filing: 18.07.2022
(51) Int. Cl.: E21D 21/02, F16B 31/02

(54) **ANCHOR PLATE SYSTEM WITH A BOLT LOAD INDICATOR**

(30) Priority: 20.07.2021 PL 43853921
(71) Applicant: Akademia Gorniczo-Hutnicza im. Stanislawa Staszica w Krakowie, 30-059 Krakow (PL)
(72) Inventor: Krzysztof, Skrzypkowski, Trzebinia Trzebina (PL)
(74) Representative: Kondrat, Mariusz

(57) **Abstract**

The invention relates to an anchor plate system for a rock bolt with a load indicator, containing two bolting washers, at least one lining element and a load indicator element located between the bolting washers, characterised in that bolting washers (5) have a dome shape, are at the same time the components of the anchor plate, and are superimposed one after another on the rod (1) of the bolting protruding from the hole (2), and are secured by the head (4a) of the bolting or the nut (4b), with the domed convexities of the bolting washers (5) are located on opposite sides, while between the bolting washers (5) there is thin-walled container (6) of known compressive strength filled with a liquid colouring agent.

## Description

The subject-matter of the invention is a lining with the roof bolting load indicator, applicable especially in the roof bolting of underground mine workings that is exposed to additional dynamic loads from shocks and damping.

From the Polish protective description of utility model PL67289Y1, a bolting load indicator is known, containing a prone element, which has the form of a sleeve with weakened walls, on the side of which four, symmetrically spaced, longitudinal holes are made. The sleeve is placed on the end of the bolting protruding from the rock mass, between its washer and nut. The indicator is inserted on the end of the bolting protruding from the rock mass, between its washer and nut. As the bolting is loaded, the weakened sleeve walls lose stability, resulting in swelling and a decrease in sleeve height, signalling the magnitude of the forces applied to the bolting. The change in the height of the sleeve indicates the impending overloading of the bolting and the need for countermeasures against its dangerous rupture. A similar solution is disclosed in Polish patent description PL192588B1, in which the energy absorber, in a variant embodiment designed for mining boltings, contains two sections of thin-walled columns of different lengths and different wall thicknesses, which are placed concentrically between plates that are typical flat washers used in boltings The absorber elements are connected to each other by a bolting rod, one end of which is fixed in the rock mass, while the other passes through holes in the washers and is provided with a nut. An additional energy of the sudden load of the bolting is absorbed by way of forcing a deformation of the thin-walled columns. Visual assessment of permanent deformations of the columns can also provide general information about the load put on the bolting.

From the US patent description US5185595A, a bolting load indicator is known, which is installed between the bolting washer and the excavation surface. The indicator consists of disc springs that are bound by two flat thrust washers. The disc springs form the lining component of the bolting that operates as a load absorber for the roof bolting. The lower washer on the side of the excavation has a hole in which a threaded sleeve is located. Inside the sleeve there is a pin that can slide along the longer sleeve. The upper, inner part of the sleeve has a spring wound around a pin to ensure a constant contact with the upper thrust washer. The extended part of the pin on the side of the excavation consists of two distinctive sections. The first outer section extending beyond the nut is painted black while the second section hidden in the nut is painted red. During the installation of the roof bolting, a preload is given until the pin ejects so that the section marked in black shows. Under the influence of the load, the disc springs are compressed, and the pin slides out of the measuring sleeve. The value of the load is inferred from the appearance, the ejection of the section of the pin painted in red. Knowing the thread pitch of the nut and the number of turns needed to establish the level between the red and black ranges on the measuring pin, the load on the bolting can be qualitatively estimated. In another variant of embodiment of the invention, the moving pin can cause the closing of an electrical circuit, connected to the signalling device. An embodiment is also possible, in which the disc springs are enclosed inside two cylinders, with the inner one, located on the side of the excavation, painted red, and the outer one having holes made in the cylindrical wall. After installing the bolting with the indicator, the protruding parts are spray-painted white. When there is any relative movement of the cylinders, caused by a change of force in the bolting, the red parts of the inner cylinder become visible through the holes in the outer cylinder.

The aim of the invention is to provide an elastic and plastic lining of the roof bolting along with the possibility of an immediate macroscopic evaluation when the bolting load threshold is exceeded without the use of any additional measuring devices.

The essence of the lining with the roof bolting load indicator, containing two bolting washers, a lining element and a load indicator element located between the bolting washers, is that the bolting washers, which have the shape of a dome, are at the same time the components of the lining and are superimposed one after the other on the bolting rod protruding from the hole and secured by a bolting head or nut, with the domed convexities of the bolting washers located on opposite sides, and a thin-walled container of known compressive strength filled with liquid colouring agent is located between the bolting washers.

It is advantageous if the thin-walled container is a spacer of toroidal or toroid-like shape, located on the bolting rod, between the flanges of the bolting washers.

Also advantageous is when the thin-walled container has a toroidal or toroid-like shape and is situated on the bolting rod, in the space formed between the domes of the bolting washers.

In addition, it is advantageous if the compressive strength of the thin-walled container with the liquid colouring agent in the scheme of loading with the bolting washers corresponds to the force that induces stresses in the bolting rods equal to the yield strength of the material of which the rods are made.

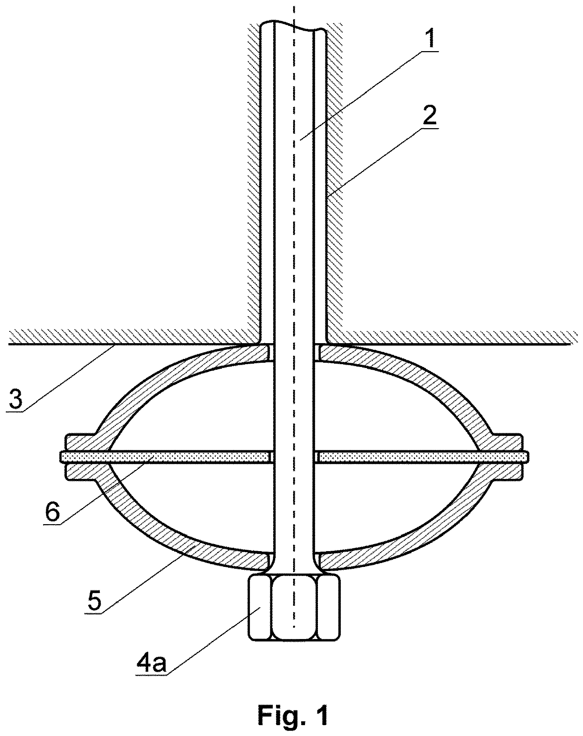

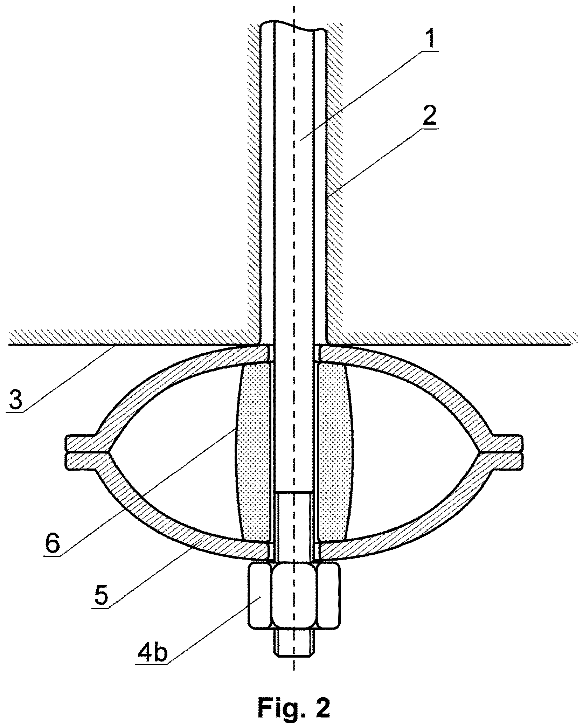

The subject-matter of the invention is depicted in the exemplary embodiment shown in the drawing wherein fig. 1 - depicts in a simplified manner the lining and the roof bolting load indicator using a thin-walled container as a spacer between the flanges of the bolting washers, fig. 2 - with a thin-walled container located between the domes of the bolting washers.

The lining with the roof bolting load indicator (fig. 1), contains two dome-shaped bolting washers 5 constituting the bolting lining, applied to bolting rod 1 protruding from hole 2 in such a way that first bolting washer 5 is turned with its convexity to roof 3 of the excavation, while the second bolting washer is turned with its convexity to the inside of the excavation. Bolting washers 5 are secured with head 4a of the bolting causing their mutual initial pressure through the toroidal spacer between their flanges, which is a thin-walled container 6 filled with a liquid colouring agent.

In another embodiment of the lining with the roof bolting load indicator (fig. 2), the thin-walled container 6 has a toroid-like shape and is located on rod 1 of the bolting, in the space formed between domes of bolting washers 5, the flanges of which are in direct contact with each other and are secured by nut 4b.

In both of the above examples, the stiffness of the washers and the strength of the thin-walled container are selected so that the destruction of thin-walled container 6 occurs when the bolting reaches a force that induces stresses in the bolting equal to the yield strength of the material of which rods 1 of the bolting are made.

The lining ensures that the load of the bolting rods is taken over and converted into an elastic deformation of bolting washers 5, or in the event of higher loads, whether static or dynamic, into their plastic deformation. Thanks to the use of thin-walled container 6 filled with a liquid colouring agent, it is possible to quickly visually estimate the degree of the stress on the bolting so that it is possible to identify sections of excavations with a compromised stability, which should be fenced off or where additional protective measures should be applied.

## Claims

1. A lining with the roof bolting load indicator, containing two bolting washers, at least one lining element and a load indicator element located between the bolting washers, **characterised in that** bolting washers (5) have a dome shape, are at the same time the components of the lining, and are superimposed one after another on the rod (1) of the bolting protruding from the hole (2), and are secured by the head (4a) of the bolting or the nut (4b), with the domed convexities of the bolting washers (5) are located on opposite sides, while between the bolting washers (5) there is thin-walled container (6) of known compressive strength filled with a liquid colouring agent.

2. The lining with the load indicator according to claim 1, **characterized in that** the thin-walled container (6) is a spacer of toroidal or toroid-like shape, located on rod (1) of the bolting, between the flanges of the bolting washers (5).

3. The lining with the load indicator according to claim 1, **characterized in that** the thin-walled container (6) has a toroidal or toroid-like shape and is situated on the rod (1) of the bolting, in the space formed between the domes of the bolting washers (5).

4. The lining with the load indicator according to claim 2 or 3, **characterised in that** the compressive strength for the thin-walled container (6) with the liquid colouring agent, in the applied scheme of loading with the bolting washers (5) corresponds to a force that in rods (1) of the bolting induces a stress equal to the yield strength of the material of which the rods (1) are made.
